# EUROPEAN PATENT APPLICATION

(11) **EP 3 379 468 A1**
(43) Date of publication of application: **26.09.2018**
(21) Application number: 17020112.3
(22) Date of filing: 23.03.2017
(51) Int. Cl.: G06Q 10/04, G06Q 10/08, G06Q 50/28, E04B 1/08, E04B 1/342, E04B 1/348

(54) **AN UNMANNED METHOD OF DROPPING OFF AND PICKING UP GAS CYLINDERS**

(71) Applicant: Linde Aktiengesellschaft, 80331 München (DE)
(72) Inventor: Opfermann, Andreas, 82166 Gräfelfing (DE); Laur, Andrus, 75326 Harjumaa (EE)

(57) **Abstract**

A method of dropping off and/or picking up at least one gas cylinder from a storage room by a user, wherein in that the user is accessed to the storage room by a mobile software application and the user drops off and/or picks up the gas cylinder by the same mobile software application without service personnel.

## Description

The present invention relates to a method of dropping off and/or picking up at least one gas cylinder from a storage room by a user.

Gas cylinder is a container which comprises a cylindical body and a narrow neck and is used to store different kinds of gases under pressure. These gases are consumed for various purposes upon their different properties. There could be flammable gases as like propane, acetylene which are used for welding or combustion, inert gases as like helium, argon or mixture thereof which are used for preventing a certain process from contacting the atmosphere, as like welding, oxidant gases as like CO2, 02, NO, or mixture thereof are used to facilitate combustion or other gases as like CO2, N2, H2, air etc. These gases are supplied to the customers under pressure in gas cylinders by the gas supplier. Conventionally, when the customers need gases and want to purchase it, they need to go to certain gas service stations where the gas cylinders are supplied and serviced by service personnel to pick up the gas cylinders and return them afterwards under construction of the service personnel. These gas service stations provide the customers the gases as wished with corresponding gas cylinders and charge for rental fees. When the gas is used up, the customer has to bring the empty gas cylinder back to the gas service station for return or exchange for a new gas cylinder.

However, the conventional way of dropping off or picking up the gas cylinders has drawback which needs to be improved. The location of the gas service station is fixed and its opening time is limited which means the customers have to go to a certain place and within a certain time frame to pick up and/or drop off the gas cylinders. In the practice, there are circumstances when a center of customers is far away from the gas service station, or when the gases are urgently needed whereas the gas service station is closed though, which makes the pick-up and drop-off of gas cylinders very inconvenient. In order to improve the flexibility and convenes of the gas service stations, the present invention provides a method of dropping off and/or picking up a gas cylinder without service personnel.

The present invention provides a method according to the claim 1, wherein a mobile software application is provided which gives the user access to the storage room and guides the user to drop off and/or pick up the at least one gas cylinder without service personnel.

Gas cylinders should be stored in a particular safe way due to the high pressure and the properties of the gases especially for the flammable or oxidant gases. Any leakage of the gases needs to be immediately detected, notified and remedied to prevent any dangerous accident from happening. For an unmanned pick-up and/or drop-off of gas cylinders in which the whole procedure is carried out by the customer self by being guided by the mobile software application, it is therefore even more important that the storage room is safeguarded and the gas cylinders are properly and reasonably stored that the customers can be easily guided by the mobile software application without any risk of causing dangerous issues.

The storage room is equipped with at least one camera, one gas detector, especially with two video cameras and two gas detectors. The two video cameras are installed inside of the storage room and preferably not in the area of flammable gases. The two gas detectors are for example for acetylene and propane which are highly flammable and therefore any leakage of them needs to be strictly monitored. Installation of at least one fire detector inside the storage room is also preferred which perceives as soon as possible once a fire breaks out. Alarm devices should be preferably also installed inside the storage room and connected to the detectors and cameras as well as the Security Company or gas Supplier Company to ensure that any abnormal situations in the storage room will be fast and carefully dealt with.

This storage room should be only accessible to customers who are entitled to use the mobile software application. The mobile software application identifies the customers and gives them access to enter the storage room. In addition, the mobile application guides the customers to understand the procedure intuitively and pick up and/or drop off the gas cylinders in a simple and safe way. By using the mobile application the customers are able to get the information of every gas cylinder as like price, quantity, history which allows the customers to select and identify the gas cylinder which fulfills their demands all by themselves without consulting personnel. It should be advised that in this application the term "user" refers also to the customer.

The storage room has a door allowing a customer to enter the storage room from outside. The door has a lock which can be unlocked from the outside by the customer applying the mobile software application. In addition, the door can be mechanically opened from inside of the storage room to ensure that nobody will be trapped in the storage room.

This lock is preferably controlled by an access control system which is integrated with the mobile software application. This access control system might be supported by a cloud-based computing service. The mobile software application is carried out by a processor, a data system and a user interface. The user interface is performed as a mobile devices as like smart phone, tablet etc. to get input from the customers and also send output to the customers. The customers carry the mobile devices and follow the instructions shown in the user interface to get access to the storage room and complete the drop-off and/or pick-up procedure unmanned.

In order to unlock the door the mobile software application generates a one-time PIN code and send over to the access control system and the customers for enabling entrance of the storage room for customers. The customers input this code to the lock to open the door. This code is preferable valid only for a limited time about one hour or so. Preferably, the cameras and/or the gas detectors and/or the fire detectors and/or the alarms equipped inside of the storage room are connected to the access control system. The access control system will generate alarm if at least one of the cameras and detectors finds something wrong. The alarm could also be generated when the door is left open for a certain time as like 3 minutes. These alarms will be sent to the security companies and/or gas supplier companies preferably via the access control system to prevent terrible accident from happening. In such cases, signals are sent to the mobile software application to stop selling products and also give a message to the users, the door will be also controlled accordingly which means it will be forcedly blocked or keeps open during the disturbance. In addition, the door should be opened manually from inside of the storage room under all circumstances to ensure that nobody will be trapped within this room.

The storage room is preferable built as a mobile container which can be easily moved to where the customers are. The container has a preferred dimension of 120m/25m/25m. Other sizes are also possible. Those containers can be situated near a construction site to support a smooth gas handling for companies located there or in smaller towns or countryside to replace existing gas service station or in cities to complete larger gas service stations by offering superior availability or in partnership with already exiting industry sales. This kind of mobile storage room for gas cylinders is very flexible and convenient as it can be varied and adjusted to the allocation of the customers either in form of a new stand point or as a complementation to an existing gas station. Besides, as this storage room does not need service personnel the gas cylinders can be picked up or dropped off all hours day and night and the cost is also reduced in comparison to a conventional gas service station.

The storage room has preferably an additional door for loading/unloading the gas cylinders which is bigger than the one for the customers and might only accessible for service personnel. The storage room has good ventilation by having open areas in walls with steel lattice and/or ventilated areas in floor with steel lattice. The storage room is weather protected which means it covers the gas cylinders from snow, rain and wind to keep them in order and low cost of facility management. There is preferable handling device in the storage room as like a trolley for lifts and move gas cylinders.

The storage room is used for storing a plurality of gas cylinders containing different gases which are divided in different groups according to their different properties. For example, the flammable gases, the inert gases and oxidant gases are stored separately by partition walls in the storage room. Except for the division according the properties of gases the empty gas cylinders are stored in a separate area other than the gas cylinders containing gases. Those partition walls which are used to separate the gas cylinders are preferably movable to be adjusted to different divisions of the gas cylinders.

There could be multiple such storage rooms combining together to enlarge and enhance the function of the storage rooms for picking up and dropping off the gas cylinders. Additional doors may be needed for combination of multiple storage rooms.

The mobile software application is carried out by a server which comprises at least three means to guide the customer to complete the pick-up and/or drop-off procedure by themselves.

The first means comprises processing input from the user through a user interface to identify the customer. After the customers have inputted the information as required for logging in to the mobile software application, the server processes the input and verifies the customers to allow them to run the mobile software application. After the login the customers receive a one-time code upon request to unlock the door of the storage room.

The second means comprises processing input from the gas cylinder through the user interface to identify the gas cylinder to be dropped off and/or picked up. Every gas cylinder has an identifier which can be read by the user interface, for example the identifier is a barcode and the user interface is a smart phone whose camera can be activated by the mobile software application to scan the barcode, alternatively, the barcode can be inputted in the smart phone manually as well. This input can be edited or modified by the customer and a confirmation from the customer may be needed afterwards to finalize the identification of the gas cylinder. By doing so, the gas cylinder is identified and its corresponding information is thus fund in the data system of the server.

After the server has identified the gas cylinder it transmits the corresponding information to the customers through the user interface. This information could be product details, price, quantity, history, whatever the customer needs to know about this gas cylinder and the gas containing within it. This is the third means which comprises transforming and transmitting data to the user through the interface. This third means includes not only transmitting the information of the gas cylinder but also other associated data as like the code for entering the door, invoice or order etc. After the customers have inputted the customer data through the user interface as required, the server processes the data and updates its data system, and then activate the customer as a user to confirm the login to this mobile software application.
The server sends the customers a code upon a request to enable the customer to unlock the door of the storage room. The request might be checked to avoid any misuses. The code might provide only one time access to the door and might be valid only for a limited time to ensure a safe and reliable access.

The mobile software application facilitates the transaction between the customers and the gas supplier without service personnel. It creates an order after the customers have identified and confirmed at least one gas cylinder to be picked up or dropped off and sends the order to the customers to get it confirmed, updates the data system and sends an invoice or other associated documents to the customers, preferable to the email of the customers. No print-out is thus necessary to complete the whole transaction.

Likewise the gas cylinder will be dropped off following the instructions of the mobile software application. The customers enter the storage room and identify the gas cylinder(s) to be returned by the mobile software application. The mobile software application confirms also the return and updates the data system accordingly.

Preferably, the mobile software application provides a help-function or communication function to assist the customers when they have problems. It may also provide function which allows the customers to have a view of the previous transactions and all information associated. Preferably, the mobile software application is connected to a cloud-based computing service which shares resources and data on demand.

The present invent will be explained in details by reference to the following description and accompanying figures which should be considered only as illustrated but not restricted. All features which are not departed from the concept and spirit of the present invention should be considered as included within the scope of the present invention.
Fig. 1: a schematic drawing of a storage room according to the present invention
Fig. 2: a schematic diagram of an embodiment of a mobile software application according to the present invention.

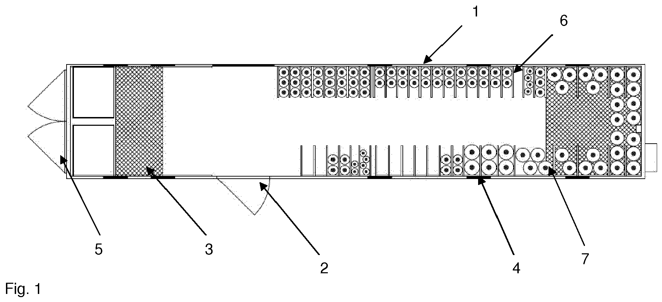

The figure 1 provides a schematic drawing of the storage room 1 which is used to store gas cylinders 7 containing different kinds of gases. The storage room 1 is built as a mobile container and preferable as a modified sea container which can be easily moved to where customers are. The storage room 1 has preferably a slim shape which increases the utilization of the storage area for gas cylinders covered by the storage room 1, for an instance, a dimension could be 120m/25m/25m(length/width/height) or 40m/25m/25m. Other sizes are also possible. The gas storage room 1 is weather protected which attempts to prevent rain, snow or storm from damaging the products stored inside the room.

The gas cylinders 7 stored in the room 1 are preferably separated upon different properties of the gases by adjustable partition walls 6 there between. The gas cylinders 7 are divided in three groups comprising an inert gas group, an oxidant gas group and a flammable gas group. These groups of gases should be stored on separate areas due to security reason. Preferably, empty gas cylinders which are returned by the customers are stored in a separate area from the rest gas cylinders.

The storage room 1 is equipped with preferably two video cameras, two gas detectors and one fire detector to be able to monitor the storage room comprehensively which prevents accidents due to gas leakage or incorrect operation from happening. The video cameras are preferably installed not in the area of flammable gases. The gas detectors are preferably for propane and acetylene which are highly flammable.

The flooring and walls of the storage room 1 are at least partially made of steel lattice. The steel lattice flooring 3 and walls 4 provide open areas in contact with the atmosphere to enhance the ventilation of the room.

The storage room has a door 2 for allowing customers to enter into the room. This door has a lock which can be unlocked from outside by a mobile software application carried by a mobile device as like a smart phone or a tablet etc. In addition, the door can be mechanically opened from inside of the storage room to ensure that nobody will be trapped in the room. This door 2 is controlled by an access control system which is integrated with the mobile software application, so not everybody can enter this storage room freely. The access control system is preferably connected to the security equipment of the storage room as like the camera and detector. In case of an abnormal situation or in case when the door 2 is left open for an unacceptable time alarm will be generated which transmits a signal to security company, gas supplier company and the access control system to take measure to deal with the abnormal situations.

The storage room has an additional big door 5 which is bigger than the door for customers 2 and is preferably situated on a different site than the customer door 2. This big door is used for loading/uploading of the gas cylinders by the gas suppliers.

There are also racks in the storage room provided which are used to keep the gas cylinders in order and safely stored. Handling device as like a trolley could be also provided in the room to lift and move the gas cylinders.

With the assistance of the mobile software application and the storage room which is tailored to the mobile software application customers are allowed to pick up and/or drop off the gas cylinders without interaction with any service personnel all hours day and night in a very safe and efficient way.

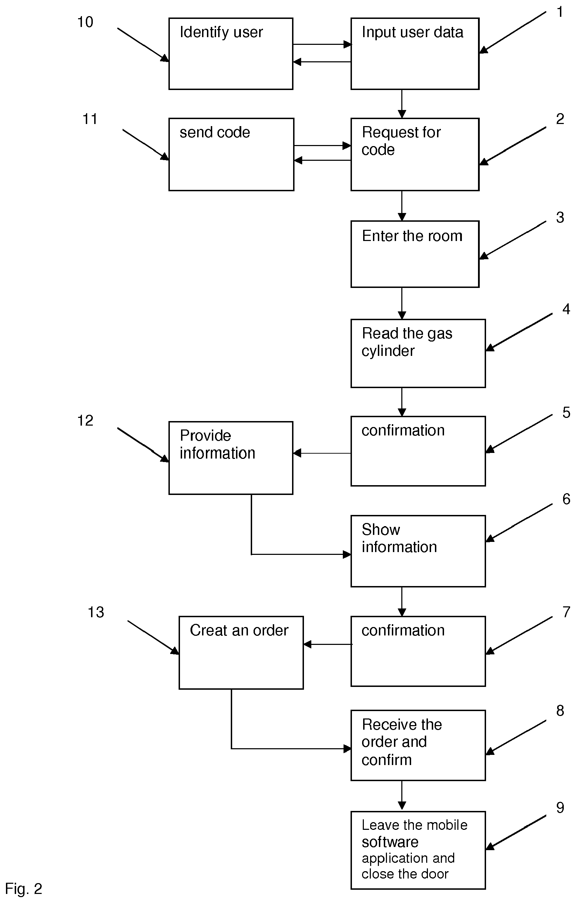

Figure 2 provides a schematic block diagram of the steps of one embodiment of the mobile software application according to the present invention. The blocks 10 to 13 indicate the process run by a server of the mobile software application and blocks 1 to 9 indicate the steps shown or done by a user which a user interface which is preferably a smartphone. The user interface is usually owned and carried by the user with which the mobile software application is integrated and it allows the user to apply the mobile software application by inputting and receiving information.

The block 1 shows a step of inputting user data in the user interface. The server identifies the user and gives permission to use the mobile software application as indicated in block 10. The user needs to download the mobile software application and log in to it with his data as required, so only permitted user is allowed to deal with the gas cylinder which enables the gas supplier to have control of their users and thus avoids any misuses. After the user has logged in to the application, he should request for a code for getting access to the storage room. This request can be made through the user interface and will be sent to the server. The server reviews the request and sends the code to the user interface which is a smartphone as indicated in block 11. It is preferred that one code only for one access which ensures a controlled access to the gas cylinders.

The user receives the code and inputs it to the door of the storage room to unlock the door as indicated in block 3. The door has an access control system which is integrated with the mobile software application and can recognize the code which is only approved and sent by the entitled server. The user enters the storage room and is guided by the mobile software application to identify at least one gas cylinder which he intends to pick up or drop off as indicated by block 4. This identification is carried out by using the smartphone to read the gas cylinder. Every gas cylinder in the storage room possesses an identifier which can be read by the mobile software application through the smartphone. This identifier is linked to a data system of the mobile software application in which the information of the gas cylinder as like the price, product details, quantity or transaction history is stored and managed. The user reads the gas cylinder and may have also option to edit or modify the read information as like to choose if it is a return or sale case. This identification action can be carried out in various ways as like by scanning a barcode on the gas cylinder with the camera of the smartphone or input an identification number on the gas cylinder into the smartphone. Any means which allow enable the gas cylinder to be recognized by the mobile software application should be covered under this identification action. The user requires the information of the gas cylinder by confirming what he reads or modifies as indicated in block 5. The server will then send him the information about the gas cylinder as indicated in block 12 and the user is informed about the gas cylinder by the smartphone as indicated in block 6. The user chooses the gas cylinder based on the information and confirms on the smartphone as indicated in block 7. The server receives the confirmation and creates an order and sends it to the user as indicated in block 13. The server runs a processor which transforms the input and generates output and updates his data system also accordingly. The user receives the order and confirms to allow the server update its data system or may also generate invoice to continue the transaction. Follow the guidance provided by the mobile software application through the smartphone the user can complete the pickup and/or drop off procedure without interaction with any service personnel. The server leads the user to the end of the procedure and the user is then free to take the gas cylinder as choose away or return the gas cylinder back and have the drop off recorded in the data system of the mobile software application. After completion of the procedure of picking up and/or dropping off the gas cylinder the user leaves the mobile software application and closes the door.

## Claims

1. A method of dropping off and/or picking up at least one gas cylinder from a storage room by a user, **characterized in that** a mobile software application is provided which gives the user access to the storage room and guides the user to drop off and/or pick up the at least one gas cylinder without service personnel.

2. According to the claim 1, **characterized in that** the storage room has a door for allowing the user to enter the storage room from outside and the door has a lock which can be unlocked from the outside by the mobile application and the door can be mechanically opened from inside of the storage room.

3. According to the claim 2, **characterized in that** the lock is controlled by an access control system which is integrated with the mobile software application.

4. According to claim 1 or 2 the storage room is built as a mobile container which can be easily moved.

5. According to one of the preceding claims that at least part of the flooring and/or part of the walls of the storage room are made of steel lattice.

6. According to one of the preceding claims, **characterized in that** the storage room is used for storing a plurality of gas cylinders which contain different kinds of pressurized gases, wherein the gas cylinders are divided by partition walls in the storage room with respect of the properties of the gases.

7. According to one the preceding claims, **characterized in that** the storage room is equipped with at least one camera and one gas detector.

8. According to claim 6 or 7, **characterized in that** the gas cylinders are divided to groups comprising flammable gas, inert gas and oxidant gas.

9. According to one of the preceding claims, **characterized in that** the mobile software application comprises a first means of processing input from the user through a user interface to identify the user, a second means of processing input from the gas cylinder through the interface to identify the gas cylinder to be dropped off and/or picked up and to access to the information of the gas cylinder and a third means of transforming and transmitting data to the user through the user interface, wherein the user interface is preferable a mobile device.

10. According to claim 9 **characterized in that** the second means comprises scanning an identifier on the gas cylinder which is preferably a barcode.

11. According to the claim 9 or 10, **characterized in that** the third means comprises creating a code upon a request made by the user and sending it to the user to unlock the door of the storage room.

12. According to the one of the claims 9 to 11, **characterized in that** the third means comprises creating an order and delivery documentation based on the input from the user and/or the gas cylinder and sending it to the user through the user interface.

13. According to the one of the claims 9 to 12, **characterized in that** the third means comprises creating an invoice based on the input from the user and/or the gas cylinder and sending it to the user, preferably to the email of the user.

14. According to one of the preceding claims, **characterized in that** the gas cylinder is dropped off and/or picked up by the user applying the mobile software application on a smart phone without service personnel all hours day and night.

15. According to one of the preceding claims, **characterized in that** the mobile software application is connected to a cloud-based computing service.
